# EUROPÄISCHE PATENTANMELDUNG

(11) **EP 2 254 228 A1**
(43) Veröffentlichungstag der Anmeldung: **24.11.2010**
(21) Anmeldenummer: 09160801.8
(22) Anmeldetag: 20.05.2009
(51) Int. Cl.: H02M 7/00

(54) **Leistungselektronisches Schaltmodul sowie System mit solchen Schaltmodulen**

(71) Anmelder: ABB Schweiz AG, 5400 Baden (CH)
(72) Erfinder: Voegeli, Andreas, CH-5403 Endingen (CH); Annen, Mathias, CH-8046 Zürich (CH); Steimer, Peter, CH-5420 Ehrendingen (CH); Mclaughlin, Steven, CH-5301 Siggenthal-Station (CH)
(74) Vertreter: ABB Patent Attorneys

(57) **Zusammenfassung**

Leistungselektronisches Schaltmodul (1) nach einem der Ansprüche 1 bis 11, **dadurch gekennzeichnet, dass** die Schaltzellen (2) an Ihren Polen derart verschaltet sind, dass zwei Ausgangsklemmen (12) gebildet sind.

System mit mindestens zwei leistungselektronischen Schaltmodulen (1) nach Anspruch 12, **dadurch gekennzeichnet, dass** die leistungselektronischen Schaltmodule (1) an den zugehörigen Ausgangsklemmen (12) über zwei in Serie geschaltete Induktivitäten (L1, L2) seriell miteinander verbunden sind und der Verbindungspunkt der beiden in Serie geschalteten Induktivitäten (L1, L2) einen Systemausgangsanschluss (P) bildet.

## Beschreibung

### BESCHREIBUNG

### Technisches Gebiet

Die vorliegende Erfindung bezieht sich auf das Gebiet der Leistungselektronik. Sie betrifft ein leistungselektronisches Schaltmodul sowie ein System mit solchen Schaltmodulen gemäss dem Oberbegriff der unabhängigen Ansprüche.

### Stand der Technik

Leistungselektronische Schaltmodule werden heute in einer grossen Anzahl in Umrichterschaltungen oder leistungselektronischen Systemen eingesetzt. Typischerweise umfasst ein solches Schaltmodul eine zweipolige Schaltzelle, wobei die Schaltzelle zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicherkreis aufweist. Üblicherweise ist der kapazitive Energiespeicherkreis durch einen oder maximal zwei kapazitive Energiespeicher gebildet. Ein vorstehend beschriebenes Schaltmodul ist beispielsweise in der DE 101 03 031 A1 angegeben. Die vorstehend genannte Verschaltung der Leistungshalbleiterschalter mit dem Energiespeicherkreis erfolgt bekanntermassen über eine typischerweise flüssigkeitsgekühlte Verschienung. Ferner ist die Serienschaltung der Leistungshalbleiterschalter in einem Leistungshalbleitermodul integriert, wobei das Leistungshalbleitermodul normalerweise an den Kühlflüssigkeitskreislauf der Verschienung angeschlossen ist.

Problematisch bei einem leistungselektronischen Schaltmodul, wie es vorstehend beschrieben wurde ist, dass aufgrund der typischen Flüssigkeitskühlung ein erheblicher Aufwand bezüglich des Aufbaus des Schaltmoduls entsteht. Darüber hinaus ist die Flüssigkeitskühlung wartungsintensiv und störungsanfällig. Zudem benötigt ein derart gekühltes Schaltmodul viel Platz, wodurch ein kompakter Aufbau kaum zu realisieren ist. Insgesamt verursacht ein derartiges Schaltmodul damit erhebliche Kosten.

### Darstellung der Erfindung

Aufgabe der Erfindung ist es deshalb, ein platzsparendes, einfach aufgebautes, wartungsfreundliches, robustes und kostengünstiges leistungselektronisches Schaltmodul anzugeben. Desweiteren ist es eine Aufgabe der Erfindung ein System mit zwei leistungselektronischen Schaltmodulen nach der Erfindung anzugeben, welches sehr einfach zu realisieren ist. Diese Aufgaben werden durch die Merkmale des Anspruchs 1 bzw. des Anspruch 13 gelöst. In den abhängigen Ansprüchen sind vorteilhafte Weiterbildungen der Erfindung angegeben.

Das erfindungsgemässe leistungselektronische Schaltmodul umfasst mindestens zwei zweipoligen Schaltzellen, wobei jede Schaltzelle zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicherkreis aufweist und die Serienschaltung der Leistungshalbleiterschalter in einem Leistungshalbleitermodul integriert ist. Erfindungsgemäss ist der Energiespeicherkreis durch mindestens drei kapazitive Energiespeicher gebildet ist, wodurch eine besonders effiziente Kühlung des Energiespeicherkreises aufgrund der vielen einzelnen Energiespeicher erreicht werden kann. Damit kann vorteilhaft die Gesamtripplestromtragfähigkeit des kapazitiven Energiespeicherkreises erhöht werden, da mehr Kühlungsoberfläche pro kapazitivem Energiespeicher zur Verfügung steht. Ferner erfolgt für jede Schaltzelle die Parallelschaltung des Energiespeicherkreises mit der Serienschaltung der Leistungshalbleiterschalter durch eine Hochstromleiterplatte, wobei die kapazitiven Energiespeicher auf einer Seite der Hochstromleiterplatte angeordnet sind und das Leistungshalbleitermodul auf derselben Seite der Hochstromleiterplatte angeordnet ist, das Leistungshalbleitermodul auf einem Kühlkörper angeordnet ist und die kapazitiven Energiespeicher und der Kühlkörper von einer Kühlluftströmung erfasst sind. Durch die Anordnung der kapazitiven Energiespeicher und des Leistungshalbleitermoduls auf derselben Seite der Hochstromleiterplatte kann ein besonders flacher und damit platzsparender Aufbau des Schaltmoduls erzielt werden. Zudem können die kapazitiven Energiespeicher und der Kühlkörper zur Kühlung des Leistungshalbleitermoduls mittels der Kühlluftströmung durch diese Anordnung besonders einfach und effektiv lediglich mit Luft gekühlt werden, so dass ein sehr einfacher, wartungsfreundlicher, unkomplizierter, robuster und schlussendlich kostengünstiger Aufbau eines leistungselektronischen Schaltmoduls erreicht werden kann.

Das erfindungsgemässe System weist mindestens zwei leistungselektronische Schaltmodule nach der Erfindung auf, wobei die leistungselektronischen Schaltmodule an zugehörigen Ausgangsklemmen über zwei in Serie geschaltete Induktivitäten seriell miteinander verbunden sind und der Verbindungspunkt der beiden in Serie geschalteten Induktivitäten einen Systemausgangsanschluss bildet. Ein solches System ist damit denkbar einfach aufgebaut und lässt sich ohne grossen Aufwand realisieren.

Diese und weitere Aufgaben, Vorteile und Merkmale der vorliegenden Erfindung werden aus der nachfolgenden detaillierten Beschreibung bevorzugter Ausführungsbeispiele der Erfindung in Verbindung mit der Zeichnung offensichtlich.

### Kurze Beschreibung der Zeichnungen

Es zeigen:
- Fig. 1: Schematische dreidimensionale Darstellung einer Ausführungsform eines erfindungsgemässen leistungselektronischen Schaltmoduls,
- Fig. 2a bis Fig. 2f: Ausführungsformen des erfindungsgemässen leistungselektronischen Schaltmoduls mit verschiedenen Verschaltungen der Schaltzellen und
- Fig. 3: eine Ausführungsform eines erfindungsgemässen Systems mit zwei leis- tungselektronischen Schaltmodulen nach der Erfindung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

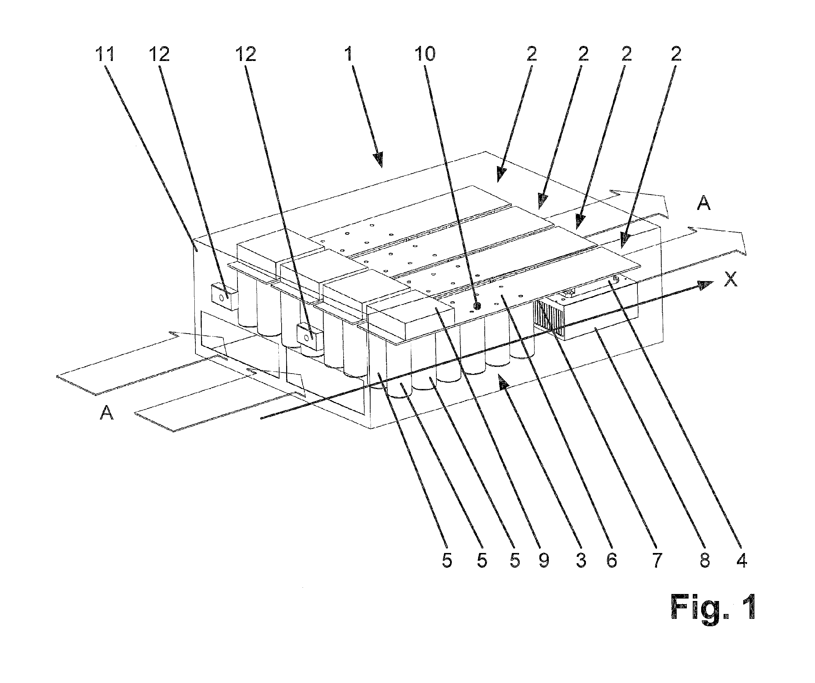

Fig. 1 zeigt eine Ausführungsform eines erfindungsgemässen leistungselektronischen Schaltmoduls 1. Das leistungselektronisches Schaltmodul 1 umfasst allgemein mindestens zwei zweipoligen Schaltzellen 2, wobei jede Schaltzelle 2 zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicherkreis 3 aufweist und die Serienschaltung der Leistungshalbleiterschalter in einem Leistungshalbleitermodul 4 integriert ist. Die Ausführungsform gemäss Fig. 1 weist beispielhaft vier zweipoligen Schaltzellen 2 auf. Der jeweilige ansteuerbare Leistungshalbleiterschalter ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgebildet. Es ist aber auch denkbar, einen ansteuerbaren Leistungshalbleiterschalter beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden. Erfindungsgemäss ist der Energiespeicherkreis 3 durch mindestens drei kapazitive Energiespeicher 5 gebildet, wodurch eine besonders effiziente Kühlung des Energiespeicherkreises 3 aufgrund der vielen einzelnen Energiespeicher 5 erreicht werden kann. Dadurch kann vorteilhaft die Gesamtripplestromtragfähigkeit des kapazitiven Energiespeicherkreises 3 erhöht werden. Desweiteren erfolgt für jede Schaltzelle 2 die Parallelschaltung des Energiespeicherkreises 3 mit der Serienschaltung der Leistungshalbleiterschalter durch eine Hochstromleiterplatte 6, wobei die kapazitiven Energiespeicher 5 auf einer Seite 7 der Hochstromleiterplatte 6 angeordnet sind und das Leistungshalbleitermodul 4 auf derselben Seite 7 der Hochstromleiterplatte 6 angeordnet ist. Zudem ist das Leistungshalbleitermodul 4 auf einem Kühlkörper 8 angeordnet und die kapazitiven Energiespeicher 5 und der Kühlkörper 8 sind von einer Kühlluftströmung A erfasst, wobei die Kühlluftströmung A in Fig. 1 durch Pfeile angedeutet sind. Die Erzeugung einer solchen Kühlluftströmung A kann beispielsweise durch ein Gebläse erfolgen. Durch die Anordnung der kapazitiven Energiespeicher 5 und des Leistungshalbleitermoduls 4 auf derselben Seite 7 der Hochstromleiterplatte 6 kann ein besonders flacher und damit platzsparender Aufbau des Schaltmoduls 1 erzielt werden. Zudem können die kapazitiven Energiespeicher 5 und der Kühlkörper 8 zur Kühlung des Leistungshalbleitermoduls 4 mittels der Kühlluftströmung durch diese Anordnung besonders einfach und effektiv lediglich mit Luft gekühlt werden, so dass ein sehr einfacher, wartungsfreundlicher, unkomplizierter, robuster und schlussendlich kostengünstiger Aufbau eines leistungselektronischen Schaltmoduls 1 erreicht werden kann. Vorzugsweise sind die Schaltzellen 2 sind eines Schaltmodul 1 voneinander beabstandet, insbesondere derart mechanisch abgegrenzt, um im Fehlerfall einer Schaltzelle 2 benachbarte Schaltzellen 2 vor Beschädigung zu schützen.

Vorzugsweise verläuft die Kühlluftströmung A mehrheitlich auf der Seite 7 der Hochstromleiterplatte 8 mit der Anordnung der kapazitiven Energiespeicher 5 und des Leistungshalbleitermoduls 4, so dass eine ausgezeichnete Kühlung der kapazitiven Energiespeicher 5 und des Leistungshalbleitermoduls 4 erreicht werden kann. Die Kühlluftströmung A weist gemäss Fig. 1 eine Kühlluftströmungsrichtung X auf, wobei der Kühlkörper 8 bezüglich der Kühlluftströmungsrichtung X nach den kapazitiven Energiespeichern 5 angeordnet ist. Der Kühlkörper 8 ist bezüglich der Kühlluftströmungsrichtung X gemäss Fig. 1 derart nach den kapazitiven Energiespeichern 5 angeordnet, dass zuerst die kapazitiven Energiespeicher 5 und danach der Kühlkörper 8 von der Kühlluftströmung A erfasst ist. Dadurch wird vorteilhaft erreicht, dass die zuerst von der Kühlluftströmung A erfassten kapazitiven Energiespeicher 5 besonders intensiv gekühlt werden können und damit thermischen Belastungen besser standhalten können. Darüber hinaus kann durch die effiziente Kühlung der kapazitiven Energiespeicher 5 eine weitere Steigerung der Gesamtripplestromtragfähigkeit des kapazitiven Energiespeicherkreises 3 erreicht. Dabei ist die notwendige Kühlung des Leistungshalbleitermoduls 4 selbstverständlich stets gewährleistet und somit mehr als ausreichend.

Gemäss Fig. 1 ist ein Kurzschlusselement 9 parallel zu einem der Leistungshalbleiterschalter geschaltet. Im Fehlerfall einer Schaltzelle 2 dient mit Vorteil das Kurzschlusselement 9 dazu, den parallel geschalteten Leistungshalbleiterschalter kurzzuschliessen und damit dem Fehlerstrom einen definierten Strompfad anzubieten. Das Kurzschlusselement 9 ist vorzugsweise auf der anderen Seite 10 der Hochstromleiterplatte 6 angeordnet, d. h. nicht auf der Seite 7 der Hochstromleiterplatte 6, auf welcher die kapazitiven Energiespeicher 5 und des Leistungshalbleitermoduls 4 der angeordnet sind. Nach Fig. 1 ist das Kurzschlusselement 9 dabei gegenüber den kapazitiven Energiespeichern 5 angeordnet. Vorzugsweise ist das jeweilige Kurzschlusselement 9 nahe an den Polen der zugehörigen Schaltzelle 2 angeordnet und räumlich von dem Leistungshalbleitermodul 4 der zugehörigen Schaltzelle 2 entfernt, wie in Fig.1 beispielhaft gezeigt.

Das leistungselektronische Schaltmodul 1 gemäss Fig. weist ein Gehäuse 11 auf. Nach Fig. 1 weist das Gehäuse Öffnungen für die Kühlluftströmung A auf, wobei die Öffnungen vorzugsweise an der den kapazitiven Energiespeichern 5 zugewandten Seite der Gehäusewand und an der dem Leistungshalbleitermodul 4 zugewandten Seite der Gehäusewand angeordnet sind. Allgemein sind die mindestens zwei Schaltzellen 2 innerhalb eines Gehäuses 11 an einer Gehäuseinnenwand angeordnet und insbesondere daran elektrisch isolierend befestigt. Da bezüglich einer Schaltzelle 2 die kapazitiven Energiespeicher 5, das Leistungshalbleitermodul 4, der zugehörige Kühlkörper, die Hochstromleiterplatte 6 und das Kurzschlusselement im Betrieb des leistungselektronischen Schaltmoduls 1 auf einem Spannungspotenzial liegen können, ist zur Vermeidung von Teilentladungen gegenüber unterschiedlichen Potentialen ausserhalb des Gehäuses 11, wie beispielsweise Erdpotential, jede Schaltzelle 2 vorteilhaft von mindestens einer weiteren Gehäuseinnenwand luftbeabstandet. Zur weiteren Verbesserung bezüglich der vorstehend erwähnten möglichen Teilentladungen weist das Gehäuse 11 des leistungselektronischen Schaltmoduls 1 Isolationsmaterial auf.

Innerhalb des Gehäuses 11 des leistungselektronischen Schaltmoduls 1 ist mindestens eine Signalverarbeitungseinheit angeordnet, wobei die Signalverarbeitungseinheit in Fig. 1 der Übersichtlichkeit halber nicht gezeigt ist. Vorzugsweise umfasst die Signalverarbeitungseinheit eine Sensorik zur Erfassung von Spannungen und/oder Strömen der Schaltzellen 2 und eine Ansteuerschaltung zur Ansteuerung der Leistungshalbleiterschalter der Schaltzellen 2. Die Anordnung mindestens einer Signalverarbeitungseinheit innerhalb des Gehäuses 11 hat den Vorteil, dass Teile von Daten und Signale des leistungselektronischen Schaltmoduls 1 nicht erst zu dem leistungselektronischen Schaltmodul 1 übertragen werden müssen, sondern durch die Signalverarbeitungseinheit schon in dem leistungselektronischen Schaltmodul 1 erfasst und bearbeitet werden können. Die Menge der zu übertragenden Daten und Signale von und zu dem leistungselektronischen Schaltmodul 1 reduziert sich dadurch signifikant. Es ist auch denkbar, dass die Signalverarbeitungseinheit zusätzlich eine Regelungseinheit zur Regelung der Ströme der Schaltzellen 2 aufweist, wodurch die Menge der zu übertragenen regelungsbezogenen Daten und Signale von und zu dem leistungselektronischen Schaltmodul 1 weiter reduziert werden kann. Die Spannungsversorgung der Signalverarbeitungseinheit kann vorteilhaft aus dem kapazitiven Energiespeicherkreis 3 einer Schaltzelle 2 erfolgen, so dass keine zusätzliche Speisung erforderlich ist. Die Signalverarbeitungseinheit verfügt ferner über eine digitale Kommunikationseinheit, welche die zu übertragenden regelungsbezogenen Daten und Signale beispielsweise über Lichtwellenleiter oder drahtlos überträgt.

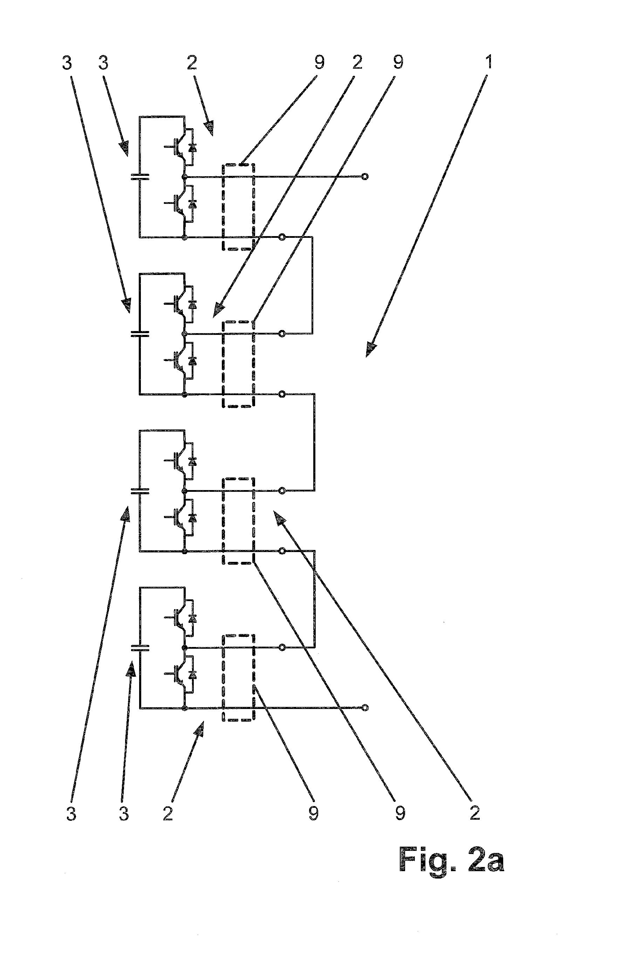

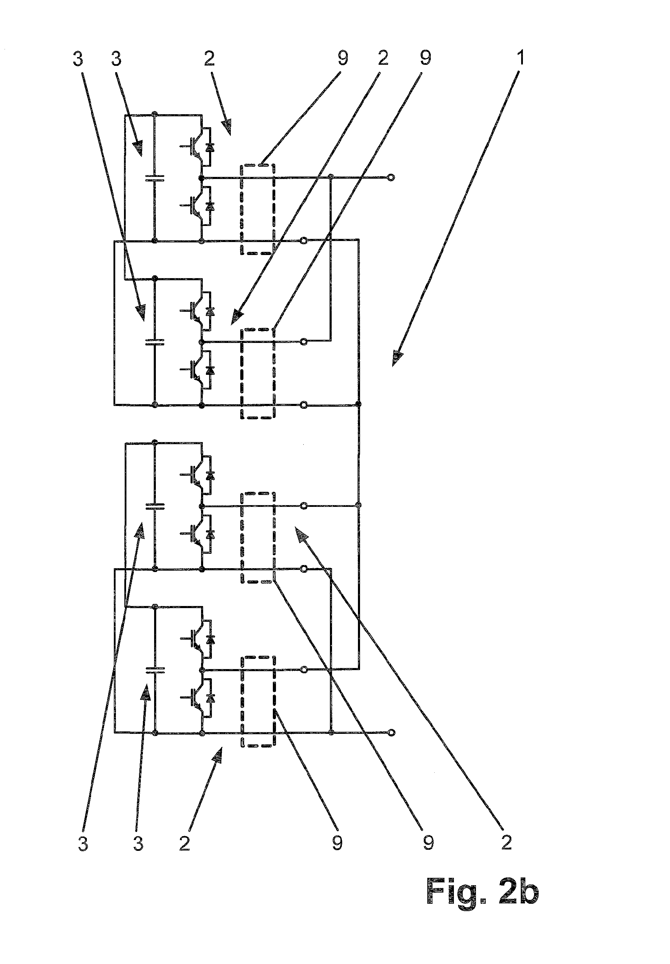

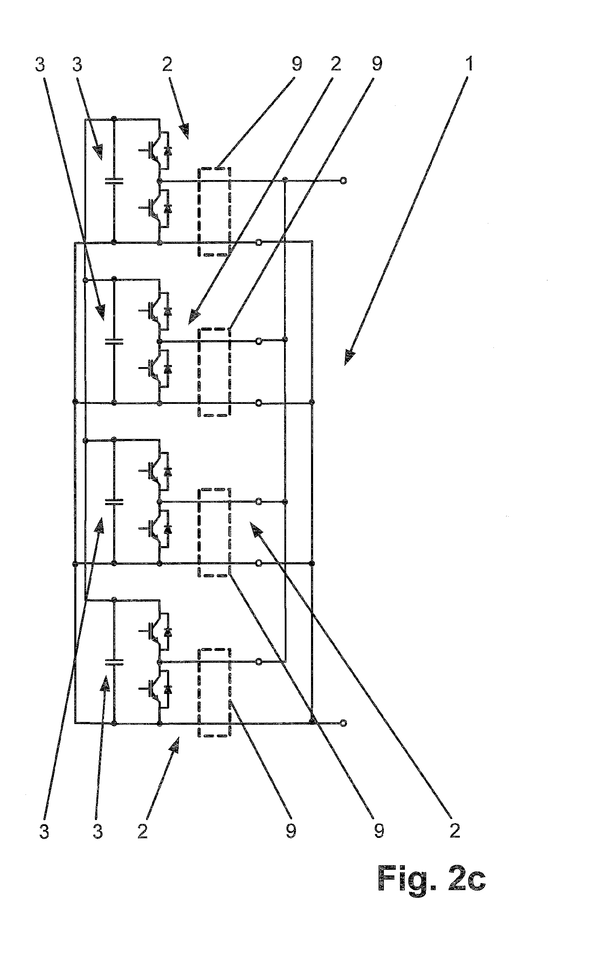

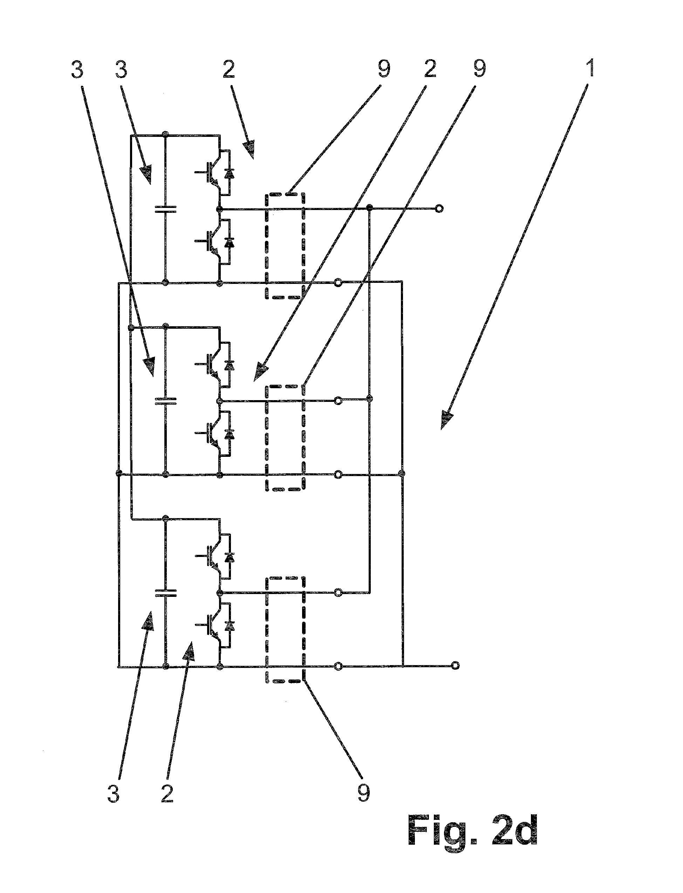

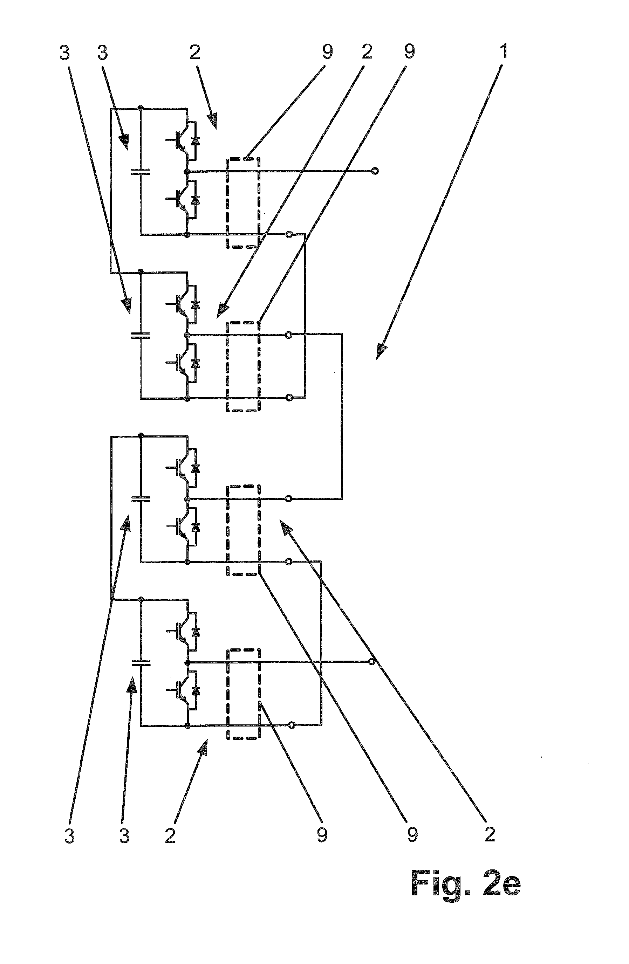

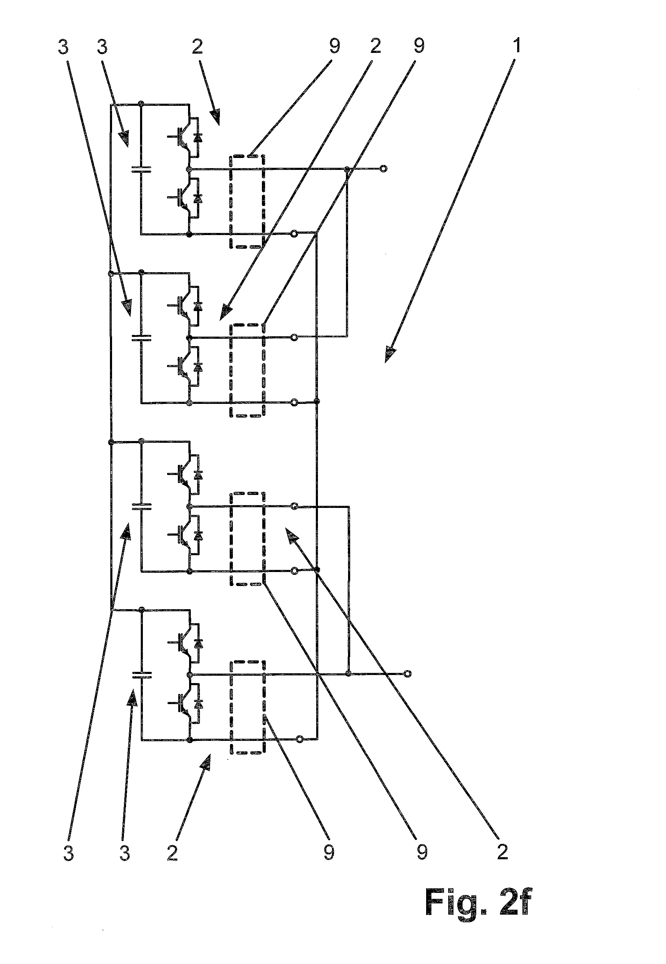

In Fig. 2a bis Fig. 2f sind Ausführungsformen des erfindungsgemässen leistungselektronischen Schaltmoduls 1 mit verschiedenen Verschaltungen der Schaltzellen 2 dargestellt. Gemäss Fig. 2a bis Fig. 2d sind die Schaltzellen 2 an ihren Polen derart verschaltet, dass zwei Ausgangsklemmen 12 gebildet sind, wobei die Ausgangsklemmen 12 in Fig. 1, in Fig. 2a bis Fig. 2f der Übersichtlichkeit halber aber nicht gezeigt sind. Allgemein ist aber auch denkbar, die Schaltzellen 2 an ihren Polen derart zu verschaltet, dass mindestens zwei Ausgangsklemmen gebildet sind.

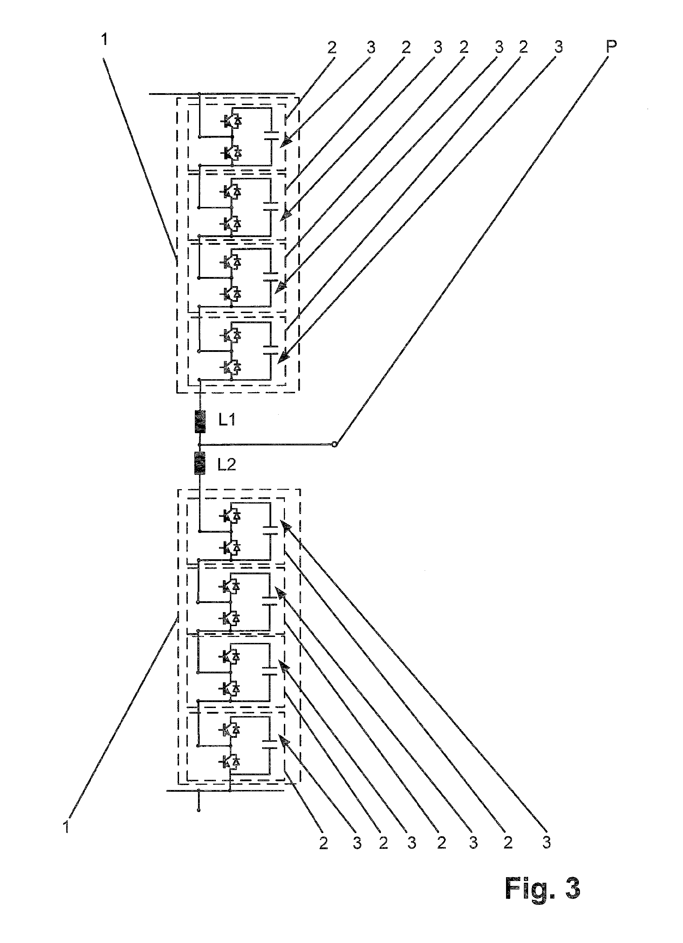

In Fig. 3 eine Ausführungsform eines erfindungsgemässen Systems mit zwei leistungselektronischen Schaltmodulen 1, allgemein mit mindestens zwei leistungselektronischen Schaltmodulen 1 nach der Erfindung angegeben, wie sie vorstehend detailliert beschrieben wurde. Gemäss Fig. 3 sind die leistungselektronischen Schaltmodule 1 an den zugehörigen Ausgangsklemmen 12 über zwei in Serie geschaltete Induktivitäten L1, L2 seriell miteinander verbunden und der Verbindungspunkt der beiden in Serie geschalteten Induktivitäten L1, L2 bildet einen Systemausgangsanschluss P. Ein solches System ist damit denkbar einfach aufgebaut und lässt sich problemlos und somit ohne grossen Aufwand realisieren.

### Bezugszeichenliste

- 1: leistungselektronisches Schaltmodul
- 2: Schaltzelle
- 3: kapazitiver Energiespeicherkreis
- 4: Leistungshalbleitermodul
- 5: kapazitive Energiespeicher
- 6: Hochstromleiterplatte
- 7: Seite der Hochstromleiterplatte
- 8: Kühlkörper
- 9: Kurzschlusselement
- 10: andere Seite der Hochstromleiterplatte
- 11: Gehäuse des leistungselektronischen Schaltmoduls
- 12: Ausgangsklemmen des leistungselektronisches Schaltmodul
- A: Kühlluftströmung
- X: Kühlluftströmungsrichtung
- P: Systemausgangsanschluss

## Patentansprüche

1. Leistungselektronisches Schaltmodul (1) mit mindestens zwei zweipoligen Schaltzellen (2), wobei jede Schaltzelle (2) zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicherkreis (3) aufweist und die Serienschaltung der Leistungshalbleiterschalter in einem Leistungshalbleitermodul (4) integriert ist,
**dadurch gekennzeichnet,**
**dass** der Energiespeicherkreis (3) durch mindestens drei kapazitive Energiespeicher (5) gebildet ist,
**dass** für jede Schaltzelle (2) die Parallelschaltung des Energiespeicherkreises (3) mit der Serienschaltung der Leistungshalbleiterschalter durch eine Hochstromleiterplatte (6) erfolgt, wobei die kapazitiven Energiespeicher (5) auf einer Seite (7) der Hochstromleiterplatte (6) angeordnet sind und das Leistungshalbleitermodul (4) auf derselben Seite (7) der Hochstromleiterplatte (6) angeordnet ist,
und **dass** das Leistungshalbleitermodul (4) auf einem Kühlkörper (8) angeordnet ist und die kapazitiven Energiespeicher (5) und der Kühlkörper (8) von einer Kühlluftströmung (A) erfasst sind.

2. Leistungselektronisches Schaltmodul (1) nach Anspruch 1, **dadurch gekennzeichnet, dass** die Kühlluftströmung (A) mehrheitlich auf der Seite (7) der Hochstromleiterplatte (8) mit der Anordnung der kapazitiven Energiespeicher (5) und des Leistungshalbleitermoduls (4) verläuft und eine Kühlluftströmungsrichtung (X) aufweist, wobei der Kühlkörper (8) bezüglich der Kühlluftströmungsrichtung (X) nach den kapazitiven Energiespeichern (5) angeordnet ist.

3. Leistungselektronisches Schaltmodul (1) nach Anspruch 2, **dadurch gekennzeichnet, dass** der Kühlkörper (8) bezüglich der Kühlluftströmungsrichtung (X) derart nach den kapazitiven Energiespeichern (5) angeordnet ist, dass zuerst die kapazitiven Energiespeicher (5) und danach der Kühlkörper (8) von der Kühlluftströmung (A) erfasst ist.

4. Leistungselektronisches Schaltmodul (1) nach einem der Ansprüche 1 bis 3, **dadurch gekennzeichnet, dass** ein Kurzschlusselement (9) parallel zu einem der Leistungshalbleiterschalter geschaltet ist.

5. Leistungselektronisches Schaltmodul (1) nach Anspruch 4, **dadurch gekennzeichnet, dass** das Kurzschlusselement (9) auf der anderen Seite (10) der Hochstromleiterplatte (6) angeordnet ist.

6. Leistungselektronisches Schaltmodul (1) nach Anspruch 5, **dadurch gekennzeichnet, dass** das Kurzschlusselement (9) gegenüber den kapazitiven Energiespeichern (5) angeordnet ist.

7. Leistungselektronisches Schaltmodul (1) nach einem der Ansprüche 1 bis 6, **dadurch gekennzeichnet, dass** die mindestens zwei Schaltzellen (2) innerhalb eines Gehäuses (11) an einer Gehäuseinnenwand angeordnet sind,
und dass jede Schaltzelle (2) von mindestens einer weiteren Gehäuseinnenwand luftbeabstandet ist.

8. Leistungselektronisches Schaltmodul (1) nach Anspruch 7, **dadurch gekennzeichnet, dass** das Gehäuse (11) Isolationsmaterial aufweist.

9. Leistungselektronisches Schaltmodul (1) nach Anspruch 7 oder 8, **dadurch gekennzeichnet, dass** mindestens eine Signalverarbeitungseinheit innerhalb des Gehäuses (11) angeordnet ist.

10. Leistungselektronisches Schaltmodul (1) nach Anspruch 9, **dadurch gekennzeichnet, dass** die Signalverarbeitungseinheit eine Sensorik zur Erfassung von Spannungen und/oder Strömen der Schaltzellen (2) und eine Ansteuerschaltung zur Ansteuerung der Leistungshalbleiterschalter der Schaltzellen (2) umfasst.

11. Leistungselektronisches Schaltmodul (1) nach Anspruch 10, **dadurch gekennzeichnet, dass** Signalverarbeitungseinheit eine Regelungseinheit zur Regelung der Ströme der Schaltzellen (2) aufweist.
